(19) Europäisches Patentamt
European Patent Office
Office européen des brevets

(11) Veröffentlichungsnummer : **0 019 251**
**B1**

(12) # EUROPÄISCHE PATENTSCHRIFT

(45) Veröffentlichungstag der Patentschrift : **16.02.83**

(51) Int. Cl.$^3$ : **C 08 G 77/10**

(21) Anmeldenummer : **80102608.9**

(22) Anmeldetag : **12.05.80**

(54) **Verfahren zur Herstellung von mehrfach verzweigten siliciumfunktionellen Polyorganosiloxanen und das hiernach erhaltene Produkt.**

(30) Priorität : **15.05.79 DE 2919559**

(43) Veröffentlichungstag der Anmeldung : **26.11.80 Patentblatt 80/24**

(45) Bekanntmachung des Hinweises auf die Patenterteilung : **16.02.83 Patentblatt 83/07**

(84) Benannte Vertragsstaaten : **BE DE FR GB IT NL**

(56) Entgegenhaltungen :
**EP A 0 003 285**
**DE A 2 345 923**
**DE A 2 453 482**
**GB A 858 128**

(73) Patentinhaber : **BAYER AG**
**Zentralbereich Patente, Marken und Lizenzen**
**D-5090 Leverkusen 1, Bayerwerk (DE)**

(72) Erfinder : **De Montigny, Armand, Dr.**
**Walter-Flex-Strasse 17**
**D-5090 Leverkusen 1 (DE)**
Erfinder : **Moretto, Hans-Heinrich, Dr.**
**Formesstrasse 13**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 019 251 B1

Jouve, 18, rue St-Denis, 75001 Paris, France

# Verfahren zur Herstellung von mehrfach verzweigten siliciumfunktionellen Polyorganosiloxanen und das hiernach erhaltene Produkt

Die vorliegende Erfindung betrifft ein Verfahren zur Herstellung von mehrfach verzweigten siliciumfunktionellen Polyorganesiloxanen durch eine sogenannte Äquilibrierung, die zum Teil in Gegenwart berechneter Mengen Wasser stattfindet, wobei als Katalysatoren Perfluoralkansulfonsäuren, Fluoralkansulfonsäuren bzw. die Salze obiger Säuren in Kombination mit überschüssigen einbasischen Carbonsäuren, wie z. B. Essigsäure oder Propionsäure verwendet werden.

Verzweigte siliciumfunktionelle Polyorganosiloxane, wie z. B. Siloxane mit endständigen Si-gebundenen Chloratomen oder Acetoxyresten sind Ausgangsprodukte für eine Vielzahl Organopolysiloxanhaltiger Materialien, da sie sich zur Umsetzung mit reaktionsfähigen Wasserstoffatomen, wie sie z. B. in Alkoholen, Aminen und vielen weiteren Verbindungen vorliegen, eignen. So dienen sie u. a. zur Herstellung von Polyether-Polysiloxan-Mischpolymeren, die durch ihre grenzflächenaktiven Eigenschaften weite technische Anwendung z. B. als Stabilisatoren zur Polyurethanschaumstoffherstellung gefunden haben, sowie anderer Blockmischpolymere. Die Versuche zur Herstellung von siliciumfunktionellen Polyorganosiloxanen konzentrierten sich bislang vor allem auf die Herstellung von chlorhaltigen Organopolysiloxanen entweder durch unvollständige Hydrolyse der Organochlorsilane (vgl. z. B. US-PS 2 381 366, DE-AS 1 174 509, DE-OS 2 345 923) oder durch Reaktion von Chlorsilanen mit vor allem cyclischen Siloxanen in Gegenwart von Katalysatoren wie z. B. $FeCl_3$ und/oder HCl (US-PS 2 421 653) oder Phosphinoxiden (US-PS 3 162 662). Auch quartäre Ammoniumsalze finden zur Ringöffnung von Cyclotrisiloxanen in Gegenwart von Chlorsilanen Verwendung, um zu Chlorsiloxanen zu gelangen (US-PS 3 162 662). Katalysatorgemische wie Halogenwasserstoff/protonensaurer Äquilibrierungskatalysator (DE-OS 2 453 482) oder Halogenwasserstoffe/peralkyliertes Säureamid (DE-OS 2 353 166) sind in neuerer Zeit im Zusammenhang mit der Umsetzung von Organochlorsilanen mit Polyorganosiloxanen beschrieben worden.

Gegenstand der vorliegenden Erfindung ist ein Verfahren zur Herstellung von mehrfach verzweigten äquilibrierten gemischten acyloxyhaltigen und chlorhaltigen Organopolysiloxanen durch Umsetzug bei Temperaturen bis maximal 135 °C eines Chlorsilans der Formel

$$P_aSiCl_{4-a}$$

wobei

a = 0 oder 1 ist,

mit einem oder mehreren Organosiloxanen, die folgende Bausteine in gegebenenfalls wechselnder Anordnung aufweisen können

$$[R_2R'SiO_{1/2}]\ [RR'SiO]\ [R'SiO_{3/2}]\ [SiO_2]$$

wobei R Wasserstoff, ein aliphatischer, aromatischer, gesättigter oder ungesättigter, gegebenenfalls halogenierter cyansubstituierter einwertiger KW-Rest mit bis zu 8 C-Atomen und R' Chlor oder Hydroxyl oder R ist, in solchen Mengenverhältnissen, daß die Zahl der siliciumgebundenen Chloratome stets die Zahl der SiOH-Gruppen um mindestens das 1,5-fache, vorzugsweise 3-fache übersteigt, in Gegenwart einer Kombination aus einer Perfluoralkansulfonsäure oder einer Alkanfluorsulfonsäure bzw. der Salze dieser Säuren und — bezogen auf die siliciumgebundenen Chloratome — der mindestens 1,1-fachen, vorzugsweise 2-fachen, molaren Menge an konzentrierter einbasischer Carbonsäure, insbesondere Essigsäure, welches dadurch gekennzeichnet ist, daß die Carbonsäure in zwei Stufen zugesetzt wird, und wobei in der 2. Stufe eine zur Erzielung der gewünschten mehrfachen Verzweigung berechnete Menge Wasser mit zugesetzt wird.

Das erfindungsgemäße Verfahren bietet gegenüber dem Stand der Technik einige nicht unerhebliche Vorteile. Der apparative Aufwand beschränkt sich auf ein Minimum, d. h. es werden weder aufwendige Kühlsysteme noch aufwendige Dosieranlagen für Wasser bzw. Druckanlagen benötigt. Ein mit Wasser gekühltes, übliches Kühlsystem genügt vollauf. Die Zudosierung des Wassers ist unkritisch. Die Reaktionsdauer (bei dem Hydrolyseverfahren durch die Wasserzugabe bedingt) beträgt nur Bruchteile der Dauer bei den oben zitierten Verfahren. Auf Druck kann zur Erzielung vollständiger Reaktion verzichtet werden. Der Verzicht auf Druck wird ebenfalls nicht auf Kosten längerer Reaktionszeiten erkauft. Der anfallende Chlorwasserstoff beträgt ein Minimum. Seine Freisetzung ist kontrollierbar, so daß weder eine Umweltbelastung noch eine Störung der Stöchiometrie durch Mitreißen von Reaktanden zu befürchten ist.

Eine bevorzugte Ausführung des Verfahrens ist dadurch charakterisiert, daß die Carbonsäure etwa die zweifache molare Menge — bezogen auf die silicium-gebundenen Chloratome — ausmacht.

Die in Frage kommenden Äquilibrierungskatalysatoren sind Perfluoralkansulfonsäuren bzw. Fluoralkansulfonsäuren wie z. B. $CF_3SO_3H$, $C_2F_5SO_3H$, $C_4F_9SO_3H$, $C_8F_{17}SO_3H$, $C_4F_8HSO_3H$ bzw. deren Salze, wobei die Kaliumverbindungen den Natrium-, Calcium- und anderen Metallverbindungen vorgezogen werden. Die Menge der eingesetzten Katalysatoren beträgt etwa 0,05 bis 1,5 Gew.-%, vorzugsweise werden — im Falle der Säuren — 0,2 bis 0,7 Gew.-% eingesetzt.

Als Silane kommen beispielsweise in Frage Methyltrichlorsilan, Chlormethyltrichlorsilan, Vinyltrichlorsilan, Phenyltrichlorsilan und Siliciumtetrachlorid.

Als Siloxane eignen sich bevorzugt die direkten Hydrolysate des Dimethyldichlorsilans, wie sie großtechnisch als Vorstufe zur Erzeugung der Cyclosiloxane anfallen, sowie die Cyclosiloxane :

$$(RR'\text{—}SiO)_n \text{ mit } n = 3 \text{ bis } 5,$$

wobei R und R' die bereits genannte Bedeutung besitzen. In Frage kommen vor allem auch beliebige lineare und verzweigte Siloxane, deren Herstellung dem Fachmann geläufig ist. Diese Siloxane können siliciumfunktionelle Gruppen wie Si-OH oder Si-Cl Gruppen oder auch seitenständige organofunktionnelle Gruppen, wie Si-vinyl, —Si—$CH_2Cl$ usw. enthalten.

Das erfindungsgemäße Verfahren wird im allgemeinen so durchgeführt, daß man das Chlorsilan mit dem Siloxan vermischt, den Katalysator zusetzt und unter Rühren langsam erwärmt. Nach etwa 20 Minuten ist die Temperatur von 60 °C erreicht. Die Viskosität des Kolbeninhalts ist stark angestiegen. Nun werden ca. 5 % der Carbonsäure, bevorzugt Essigsäure zugegeben, wobei die Viskosität wieder abgebaut wird. Nachdem 90 °C erreicht wurden, wird innerhalb von etwa 45 Minuten etwa die Hälfte der vorgesehenen Essigsäuremengen — vorzugsweise die stöchiometrische Menge, bezogen auf die siliciumgebundenen Chloratome — zugesetzt und auf ca. 130-135 °C aufgeheizt.

Anschließend wird bei dieser Temperatur der Rest der Carbonsäure, die mit der berechneten Menge Wasser versetzt worden war, etwa innerhalb einer Stunde zugesetzt. Die zweistufige Zugabe der Carbonsäure kann natürlich auch mit ungleichen Portionen, z. B. 10/90, 30/70 oder auch 90/10 (jeweils Gew.-Teile) vorgenommen werden. Bevorzugt ist jedoch eine Zugabe etwa gleich großer Anteile.

Anschließend wird ca. 1-2 Stunden am Rückfluß gekocht. Nach Abkühlung wird die übrig gebliebene Carbonsäure im Wasserstrahlvakuum abdestilliert. Zurück bleibt eine transparente stark hygroskopische Flüssigkeit, die je nach Qualität der eingesetzten Materialien leicht gelb bis bräunlich gefärbt ist.

Die Äquilibrierungsreaktion kommt nach der Entfernung der Carbonsäure (Destillation im Vakuum) sofort zum Stehen. Das Ausheizen niedermolekularer Anteile, wie z. B. Octamethylcyclotetrasiloxan wird somit problemlos.

Aufgrund der günstigen Reaktionsbedingungen, sowie der kurzen Reaktionszeiten, ist eine kontinuierliche Herstellung ohne weiteres möglich. Als einbasische Carbonsäure können z. B. Essigsäure, Propionsäure oder auch höhere Carbonsäuren eingesetzt werden. Bevorzugt wird jedoch Essigsäure.

Die vorliegende Erfindung wird durch die nachfolgenden Beispiele näher erläutert (%-Angaben beziehen sich — soweit nicht anders vermerkt — auf Gew.-%). Die funktionellen Endgruppen werden in Form von mval $H^+$ pro 100 g angegeben.

## Beispiel 1-2

777 g [2,625 Mol] Octamethylcyclotetrasiloxan werden mit 75 g [0,5 Mol] Methyltrichlorsilan vermischt. Hierzu werden 2,25 g [0,26 %] Perfluorbutansulfonsäure gegeben. Es wird anschließend langsam hochgeheizt. Nach ca. 20 Minuten ist die Temperatur auf 60 °C gestiegen und der Kolbeninhalt ist hochviskos geworden. Es werden nun 15 g [0,25 Mol] reine Essigsäure zugetropft, wobei die Viskosität des Siloxans schnell abnimmt. Nach 10 Minuten werden bei 90 °C innerhalb von 45 Minuten 85 g [1,42 Mol] Essigsäure zugetropft. Nach Zugabe der Essigsäure wird innerhalb 30-60 Minuten auf Rückflußtemperatur (ca. 135 °C) hochgeheizt. Bei dieser Temperatur wird in 60 Minuten ein Gemisch von 100 g [1,67 Mol] Essigsäure und 5 g [0,28 Mol] Wasser zugegeben. Nach 30-60-minütigem Rühren wird abgekühlt und bei 18 mbar und 120 °C (Sumpftemperatur) ausgeheizt.

Der Rückstand ist eine klare leicht gelbliche Flüssigkeit.

Ergebnisse :

| Beispiel | 1 | 2 |
|---|---|---|
| Ausbeute [a] | 838 | 838 |
| Ausheiz-Destillat [g] | 149 | 149 |
| mval $H^+$/100 g | 98,6 | 98,0 |

## Beispiel 3-4

Die Beispiele 1-2 wurden wiederholt mit der Ausnahme, daß anstatt 5 g [0,28 Mol] 6 g [0,33 Mol] Wasser zugesetzt wurden. In Beispiel 4 wurde der gesamte Ansatz verdoppelt. Die äußeren Bedingungen (Zeit, Temperatur, Druck) waren unverändert.

Ergebnisse :

| Beispiel : | 3 | 4 |
|---|---|---|
| Ausbeute [g] | 833 | 1 575 |

| | | |
|---|---|---|
| Ausheizdestillat [g] | 169 | 395 |
| mval $H^+$/100 g | 85,8 | 90 |

Beispiel 5

Nach der im Beispiel 1-2 beschriebenen Methode werden 1 776 g [6,00 Mol] Octamethylcyclotetrasiloxan und 150 g [1 Mol] Methyltrichlorsilan in Gegenwart von 5,7 g [0,3 %] Perfluorbutansulfonsäure und 360 g Essigsäure mit 9 g [0,5 Mol] Wasser umgesetzt. Ausheiztemperatur : 120 °C bei 18 mbar. Der Rückstand ist eine leichte gelbliche gefärbte Flüssigkeit.

Ergebnisse :

| | |
|---|---|
| Ausbeute [g] | 1 778 |
| Ausheizdestillat [g] | 326 |
| mval $H^+$/100 g | 96,2 |

Beispiel 6

Beispiel 5 wurde wiederholt, in dem jedoch die Essigsäuremenge auf 480 g und die Wassermenge auf 15,3 g [0,85 Mol] erhöht wurde. Die anderen Bedingungen blieben unverändert.

Ergebnisse :

| | |
|---|---|
| Ausbeute [g] | 1 843 |
| Ausheizdestillat [g] | 479 |
| mval $H^+$/100 g | 65 |

Beispiel 7

Nach der im Beispiel 1-2 beschriebenen Methode werden 299 g [2,00 Mol] Methyltrichlorsilan und 2 220 g [7,5 Mol] Octamethylcyclotetrasilan in 800 g technischer Essigsäure mit 21 g [1,167 Mol] Wasser in Gegenwart von 6,9 g [0,27 %] Perfluorbutansulfonsäure ungesetzt. Die Ausheiztemperatur betrug 120 °C (Sumpftemperatur) bei 18 mbar.

Ergebnisse :

| | |
|---|---|
| Ausbeute [g] | 2 472 |
| Ausheizdestillat [g] | 534 |
| mval $H^+$/100 g | 136,7 |

Beispiel 8

Nach der in Beispiel 1-2 beschriebenen Methode werden 1 110 g [3,75 Mol] Octamethylcyclotetrasiloxan und 187 g [1,25 Mol] Methyltrichlorsilan in 375 g reiner Essigsäure mit 11,2 g [0,662 Mol] Wasser in Gegenwart von 4,32 g [0,33 %] Perfluorbutansulfonsäure umgesetzt. Die äußeren Bedingungen waren unverändert bis auf die Ausheiztemperatur, die 135 °C bei 7 mbar betrug.

Ergebnisse :

| | |
|---|---|
| Ausbeute [g] | 1 179 |
| Ausheizdestillat [g] | 266 |
| mval $H^+$/100 g | 158 |

**Ansprüche**

1. Verfahren zur Herstellung von mehrfach verzweigten, äquilibrierten gemischten acyloxyhaltigen und chlorhaltigen Organopolysiloxanen durch Umsetzen eines Chlorsilans der Formel

$$R_aSiCl_{4-a}$$

wobei
a = 0 oder 1 ist,
mit einem oder mehreren Organosiloxanen, die folgende Bausteine in gegebenenfalls wechselnder Anordung aufweisen können,

$[R_2R'SiO_{1/2}]$ $[RR'SiO]$ $[R'SiO_{3/2}]$ $[SiO_2]$

wobei R Wasserstoff, ein aliphatischer, aromatischer, gesättigter oder ungesättigter, gegebenenfalls halogenoder cyansubstituierter einwertiger Kohlenwasserstoffrest mit bis zu 8 C-Atomen ist, und R' Chlor oder Hydroxyl ist oder die bei R angegebene Bedeutung hat in solchen Mengenverhältnissen, daß die Zahl aller SiCl-Gruppen stets die Zahl der SiOH-Gruppen um mindestens das 1,5-fache übersteigt, in Gegenwart einer Kombination aus einer Perfluoralkansulfonsäure oder einer Alkanfluorsulfonsäure bzw. deren Salze und -bezogen auf die siliciumgebundenen Chloratome — der mindestens 1,1-fachen molaren Menge an konzentrierter einbasischer Carbonsäure, welcher dadurch gekennzeichnet ist, daß die Carbonsäure in zwei Stufen zugesetzt wird, und wobei in der 2. Stufe eine zur Erzielung der gewünschten Verzweigungen berechnete Menge Wasser zusammen mit der Carbonsäure zugesetzt wird.

2. Verfahren nach Anspruch 1, dadurch gekennzeichnet, daß als Carbonsäure Essigsäure eingesetzt wird.

3. Verfahren nach Anspruch 1 oder 2, dadurch gekennzeichnet, daß die Umsetzung bei Temperaturen bis 135 °C durchgeführt wird.

4. Verfahren nach einem der Ansprüche 1 bis 3, dadurch gekennzeichnet, daß als Katalysatoren $CF_3SO_3H$, $C_2F_5SO_3H$, $C_4F_9SO_3H$ oder $C_8F_{17}SO_3H$ bzw. deren Salze eingesetzt werden.

5. Verfahren nach einem der Ansprüche 1 bis 4, dadurch gekennzeichnet, daß in der 1. und 2. Stufe etwa gleiche Mengen an Carbonsäure zugegeben werden.

6. Verfahren nach einem der Ansprüche 1 bis 4, dadurch gekennzeichnet, daß als Chlorsilane Methyltrichlorsilan, Phenyltrichlorsilan und/oder Silisiumtetrachlorid eingesetzt werden.

7. Äquilibriertes, verzweigtes Chlor- bzw. Acyloxy-Gruppen-haltiges Organopolysiloxan, hergestellt nach einem Verfahren gemäß einem der Ansprüche 1 bis 6.

## Claims

1. Process for the production of multi-branched equilibrated mixed acyloxy-containing and chlorine-containing organopolysiloxanes by reacting a chlorosilane of the formula

$$R_aSiCl_{4-a}$$

wherein
a = 0 or 1,
with one or more organosiloxanes which can contain the following units in optionally varying sequence,

$[R_2R'SiO_{1/2}]$ $[RR'SiO]$ $[R'SiO_{3/2}]$ $[SiO_2]$

wherein R is hydrogen, or an aliphatic, aromatic, saturated or unsaturated, optionally halogen-substituted or cyano-substituted monovalent hydrocarbon radical with up to 8 C atoms, and R' is chlorine or hydroxyl or has the meaning indicated for R, in proportions such that the number of all the SiCl groups is always at least 1.5 times greater than the number of SiOH groups, in the presence of a combination of a perfluoroalkanesulphonic acid or an alkanefluorosulphonic acid, or salts thereof and — based ond the chlorine atoms bonded to silicon — at least 1.1 times the molar amount of concentrated monobasic carboxylic acid, which is characterised in that the carboxylic acid is added in two stages and wherein in the 2nd stage an amount of water calculated to achieve the desired branchings is added together with the carboxylic acid.

2. Process according to Claim 1, characterised in that acetic acid is used as the carboxylic acid.

3. Process according to Claim 1 or 2, characterised in that the reaction is carried out at temperatures up to 135 °C.

4. Process according to one of Claims 1 to 3, characterised in that $CF_3SO_3H$, $C_2F_5SO_3H$, $C_4F_9SO_3H$ or $C_8F_{17}SO_3H$ or salts thereof are used as catalysts.

5. Process according to one of Claims 1 to 4, characterised in that in the 1st and 2nd stage approximately equal amounts of carboxylic acid are added.

6. Process according to one of Claims 1 to 4, characterised in that methyltrichlorosilane, phenyltrichlorosilane and/or silicon tetrachloride are used as the chlorosilane.

7. An equilibrated, branched organopolysiloxane containing chlorine or acyloxy groups, produced by a process according to one of Claims 1 to 6.

## Revendications

1. Procédé de préparation d'organopolysiloxanes mixtes, équilibrés, ramifiés plusieurs fois et contenant du chlore et des groupes acyloxy par réaction d'un chlorosilane de formule

$R_aSiCl_{4-a}$

dans laquelle

a = 0 ou 1,

avec un ou plusieurs organosiloxanes pouvant comporter les groupes édificateurs ci-après en une disposition éventuellement alternée

$$[R_2R'SiO_{1/2}]\ [RR'SiO]\ [R'SiO_{3/2}]\ [SiO_2]$$

où R représente de l'hydrogène, un radical d'hydrocarbure aliphatique ou aromatique monovalent, saturé ou insaturé, éventuellement substitué par un atome d'halogène ou un groupe cyano et contenant jusqu'à 8 atomes de carbone, tandis que R' représente un atome de chlore ou un groupe hydroxy ou a la signification indiquée pour R, dans des rapports quantitatifs calculés de telle sorte que le nombre de tous les groupes SiCl dépasse constamment le nombre de groupes SiOH d'au moins 1,5 fois, en présence d'une combinaison d'un acide perfluoralcanesulfonique ou d'un acide alcane-fluorosulfonique ou de leurs sels et, rapporté aux atomes de chlore liés au silicium, d'un acide carboxylique monobasique concentré en une quantité molaire d'au moins 1,1 fois, caractérisé en ce qu'on ajoute l'acide carboxylique en deux étapes et, lors de la deuxième étape, conjointement avec l'acide carboxylique, on ajoute de l'eau en une quantité calculée pour obtenir les ramifications désirées.

2. Procédé suivant la revendication 1, caractérisé en ce que, comme acide carboxylique, on utilise l'acide acétique.

3. Procédé suivant l'une quelconque des revendications 1 et 2, caractérisé en ce qu'on effectue la réaction à des températures allant jusqu'à 135 °C.

4. Procédé suivant l'une quelconque des revendications 1 à 3, caractérisé en ce que, comme catalyseurs, on utilise $CF_3SO_3H$, $C_2F_5SO_3H$, $C_4F_9SO_3H$ ou $C_8F_{17}SO_3H$ ou leurs sels.

5. Procédé suivant l'une quelconque des revendications 1 à 4, caractérisé en ce que, lors de la première et de la deuxième étape, on ajoute l'acide carboxylique en quantités à peu près égales.

6. Procédé suivant l'une quelconque des revendications 1 à 4, caractérisé en ce que, comme chlorosilanes, on utilise le méthyltrichlorosilane, le phényltrichlorosilane et/ou le tétrachlorure de silicium.

7. Organopolysiloxane équilibré, ramifié et contenant du chlore ou des groupes acyloxy, préparé par un procédé suivant une des revendications 1 à 6.